# EUROPÄISCHE PATENTSCHRIFT

(11) **EP 1 090 051 B1**
(45) Veröffentlichungstag und Bekanntmachung des Hinweises auf die Patenterteilung: **22.09.2004**
(21) Anmeldenummer: 99916905.5
(22) Anmeldetag: 01.04.1999
(51) Int. Cl.: C08G 2/18, C08G 65/08, C08G 65/10, C08G 4/00

(54) **POLYOXYMETHYLEN-FORMMASSE MIT VERBESSERTER VERARBEITUNGSSTABILITÄT UND VERMINDERTER EMISSIONSNEIGUNG**
POLYOXYMETHYLENE MOULDING MATERIAL WITH IMPROVED PROCESSING STABILITY AND A REDUCED EMISSIONS TENDENCY
MATIERE DE MOULAGE A BASE DE POLYOXYMETHYLENE PRESENTANT UNE MEILLEURE STABILITE DE TRAITEMENT ET UNE TENDANCE REDUITE AUX EMANATIONS

(30) Priorität: 08.04.1998 DE 19815663
(43) Veröffentlichungstag der Anmeldung: 11.04.2001
(73) Patentinhaber: Ticona GmbH, 65451 Kelsterbach (DE)
(72) Erfinder: DISCH, Stefan, D-60599 Frankfurt (DE); ECKARDT, Peter, D-65719 Hofheim (DE); MÜCK, Karl-Friedrich, D-65207 Wiesbaden (DE); REUSCHEL, Gerhard, D-65835 Liederbach (DE); REISSMANN, Lothar, D-65719 Hofheim (DE)
(86) Internationale Anmeldenummer: PCT/EP1999/002280
(87) Internationale Veröffentlichungsnummer: WO 1999/052959

(56) Entgegenhaltungen:
- EP-A- 0 010 751
- DE-A- 2 048 937
- DE-A- 2 101 817

## Beschreibung

Verwendungen von Polyoxymethylen-Formmassen zur Herstellung von Formteilen mit verbesserter Verarbeitungsstabilität und verminderter Emissionsneigung

Die vorliegende Erfindung betrifft ausgewählte Verwendungen von Polyoxymethylen-Formmassen, die eine besonders hohe Stabilität aufweisen.

Seit ihrer Markteinführung vor etwa 30 Jahren haben sich Polyoxymethylene (POM) als äußerst nützliche technische Werkstoffe in vielen Anwendungen durchgesetzt. Besonders als Konstruktionswerkstoff im Automobilbau und in der Elektroindustrie findet POM breite Anwendung. Beispiele hierfür sind in den anwendungstechnischen Broschüren der POM-Hersteller zu finden.

POM-Copolymere und ihre Herstellung sind bereits sehr gut bekannt (Sabel et al. in Becker/Braun Hrsg., Kunststoff-Handbuch Band 3/1). So ist bereits gut bekannt, daß Trioxan unter Verwendung von kationisch aktiven initiatoren mit zyklischen Ethern copolymerisierbar ist. Als kationisch wirkende Initiatoren werden üblicherweise Lewissäuren wie BF₃, starke Protonensäuren wie HCIO₄, Heteropolysäuren oder Perfluoralkansulfonsäuren eingesetzt. Als Comonomer wird üblicherweise Ethylenoxid oder das zyklische Formal von Ethylenglykol, Butandiol oder Diethylenglykol verwendet.

Prinzipiell kann der Comonomergehalt im POM-Copolymer sehr breit variiert werden. In JP07286024 wird beispielsweise für Copolymere aus Oxymethylen und C₂-C₄-Oxyalkylenen, die durch langkettige aliphatische Endgruppen modifiziert sind, ein Bereich von 0.03 bis 10 mol-% an Comonomereinheiten im Polymeren angegeben. In JP07124996 wird allgemein ein POM-Copolymer beschrieben, bei dem der Conomonomeranteil im Polymeren zwischen 3 und 30 Gew.-% liegen kann.

Zur Herstellung von POM-Copolymeren wird allgemein ein Comonomergehalt von 3 bis 4 Gew.-% angegeben, wobei diese Angabe als Massenanteil des Comonomeren im Monomerengemisch zu verstehen ist (Beispiele: JP07286023; JP06049155; JP04108819).

Um stabilere Produkte zu erhalten, werden POM-Formmassen über einen längeren Zeitraum hinweg mit wässeriger Amoniaklösung behandelt (JP54107972) oder in wässeriger Suspension unter Druck auf 100 bis 200°C erhitzt (NL-A-6812966).

Produkte aus POM-Copolymeren werden seit langem kommerziell hergestellt und für technische Bauteile verwendet. Dabei wird von POM-Formmassen ein bestimmtes Niveau an mechanischen Eigenschaften wie Steifigkeit, Härte und Zähigkeit gefordert, das den Einsatz dieser Materialien für technische Bauteile wie Zahnräder, Hebel und viele andere erst möglich macht. Die in den Broschüren der Hersteller von POM-Copolymeren veröffentlichten Werte für die Streckspannung liegen zwischen 60 und 70 N/mm². Für den Zug-E-Modul von unmodifizierten Copolymeren findet man dort Werte zwischen 2400 und 3100 N/mm². Für die Kerbschlagzähigkeit bei 23°C findet man Werte zwischen 4 und 12 mJ/mm².

Aufgrund dieser vorteilhaften Eigenschaften von POM-Formmassen besteht das Bedürfnis, für diese Materialien weitere Anwendungsfelder zu erschließen.

Neben der Einhaltung des mechanischen Eigenschaftsprofils wird nun zunehmend gefordert, dass Formteile nur noch geringe Emissionen an Restmonomeren oder sonstigen flüchtigen Bestandteilen aufweisen dürfen. Die Automobilindustrie als einer der wichtigsten Märkte für Produkte aus POM hat spezielle Analysenmethoden hierfür entwickelt (VDA Empfehlung Nr. 275, Dokumentation Kraftfahrwesen e. V., Juli 1994). Auch im Hinblick auf die Einfärbung von POM ist ein geringer Anteil von Restmonomeren und sonstigen flüchtigen Bestandteilen von Bedeutung, da gerade POM schwierig einzufärben ist (vgl. Damm W., Herrmann E., in Gächter, Müller; 3. Ausgabe, S. 730).

Die heute erhältlichen kommerziell hergestellten POM-Produkte haben zwar die bekannten vorteilhaften mechanischen Eigenschaften, die daraus hergestellten Formteile weisen aber eine zu hohe Emission von 30 mg/kg oder mehr an Formaldehyd auf. Durch eine aufwendige Nachbehandlung der Formteile, z.B. durch intensives Ausheizen, wird versucht, ein niedrigeres Emissionsniveau zu erreichen. Durch die Nachbehandlung entstehen jedoch zusätzliche Kosten.

Auch die in vielen Patenten beschriebenen Stabilisierungssysteme für POM, in denen in der Regel bestimmte Formaldehydfänger eingesetzt werden, konnten bislang dem Mangel der hohen Emissionen nicht abhelfen. Mit den bislang üblichen POM-Formmassen gelingt es nicht zuverlässig, emissionsarme Formteile herzustellen.

Aus der EP-A-010,751 und der DE-A-21 01 817 sind Kraftstoffleitungen aus speziellen Kunststoffverbundsystemen bzw. thermoplastische Formmassen auf POM-Basis bekannt. Aus diesen Dokumenten erhielt der Fachmann keinerlei Anregungen, gerade ausgewählte POM-Formmassen für ausgewählte Einsatzgebiete einzusetzen.

Aus diesen Dokumenten war auch nicht ableitbar, dass gerade Polyoxymethylen-Copolymere mit dem Gehalt an Oxyethyleneinheiten gemäß den Ansprüchen das für die erfindungsgemäßen Verwendungen gewünschte Eigenschaftsprofil aufweisen.

Daher waren POM-Formmmassen zu entwickeln, die einerseits eine wesentlich verringerte Emissionsneigung aufweisen, andererseits aber das bekannte und von der Industrie geforderte Eigenschaftsniveau hinsichtlich der mechanischen Eigenschaften aufweisen und die sich hervorragend zur Herstellung von Formteilen für die Innenausstattung oder Innenverkleidung von Verkehrsmitteln, von Formteilen in Form von Haushaltwaren, Spielzeugartikeln, von Formteilen in Form von elektronischen und elektrotechnischen Bauteilen und Geräten und von Formteilen in Form von Apparaturen und Instrumenten für medizinische Anwendungen eignen.

Die Aufgabe wird durch die oben genannten Verwendungen von linearen POM-Copolymeren gelöst, die im wesentlichen Oxymethylen- und Oxyethyleneinheiten als Struktureinheiten in der Polymerkette aufweisen, wobei der Anteil der Oxyethyleneinheiten an den Struktureinheiten der Polymerkette 1,85 bis 2,5 mol-%, vorzugsweise 1,85 bis 2,25 mol-% beträgt, und wobei die daraus hergestellten Formteile eine Formaldehydemission von weniger als 15 mg/kg aufweisen.

Überraschenderweise verfügen gerade die erfindungsgemäß eingesetzten Formmassen einerseits über eine wesentlich verbesserte Stabilität, so daß daraus hergestellte Formteile nur noch äußerst geringe Emissionen aufweisen. So beträgt die Formaldehydemission, gemessen an Platten der Wandstärke 1 mm nach 24 Stunden Lagerdauer, nach VDA 275 weniger als 15 mg/kg, vorzugsweise weniger als 10 mg/kg.

Andererseits entsprechen die mechanischen Eigenschaften der erfindungsgemäß eingesetzten Formmassen den üblichen Anforderungen an POM-Handelsprodukten, so daß die erfindungsgemäßen Anwendungsfelder sowie die für POM üblichen Verarbeitungstechniken ohne Einschränkung genutzt werden können.

Die erfindungsgemäß eingesetzten Formmassen bestehen aus linearen POM-Copolymeren, die als Struktureinheiten neben Oxymethyleneinheiten im wesentlichen nur Oxyethyleneinheiten als Co-Komponente in der Polymerkette aufweisen. Das Copolymer kann prinzipiell auch einen geringen Anteil an längerkettigen, z.B. C₃- oder C₄-Oxyalkyleneinheiten enthalten. Diese führen jedoch bei gleichbleibend geringer Emissionsneigung zu ungünstigeren mechanischen Eigenschaften.

Im allgemeinen beträgt in den erfindungsgemäß eingesetzten Formmassen der Anteil der Oxyethyleneinheiten an den Struktureinheiten der Polymerkette 1,85 bis 2,5 mol-%. Vorzugsweise liegt ihr Anteil bei 1,85 bis 2,25 mol-%. Der Anteil längerkettiger Oxyalkyleneinheiten sollte im allgemeinen 0,6 mol-%, vorzugsweise 0,3 mol-% an den Struktureinheiten der Polymerkette nicht überschreiten. Auch die Summe von Oxyethyleneinheiten und längerkettigen Oxyalkyleneinheiten an den Struktureinheiten der Polymerkette beträgt im allgemeinen 1,85 bis 2,5 mol-%, vorzugsweise 1,85 bis 2,25 mol-%.

POM-Copolymere mit einem gegenüber den erfindungsgemäß eingesetzten Produkten weiter erhöhten Anteil an Comonomereinheiten haben zwar ebenfalls die geforderten niedrigen Emissionswerte, sind aber aufgrund der wesentlich geringeren Steifigkeit und Festigkeitswerte nicht mehr für die erfindungsgemäßen Anwendungsfelder für POM einsetzbar.

Die Herstellung der erfindungsgemäß eingesetzten POM-Copolymeren kann mit allgemein bekannten Herstellungsverfahren erfolgen. Ein mögliches Verfahren ist beispielsweise die Copolymerisation von Trioxan mit 4 bis 6 Gew.-%, vorzugsweise 4,5 bis 5,5 Gew.-% Dioxolan in Gegenwart allgemein üblicher Mengen von BF₃ und Methylal, wobei die Menge Dioxolan auf die Summe von Dioxolan und Trioxan bezogen ist. Der Anteil des Comonomeren im Monomerengemisch beträgt entsprechend 4,8 bis 7,2 mol-%, vorzugsweise 5,4 bis 6,6 mol-%.

Den erfindungsgemäß eingesetzten POM-Copolymeren können noch die üblichen Stabilisatoren und Hilfsstoffe wie Antioxidantien, Entformungshilfen, Säurefänger, stickstoffhaltige Costabilisatoren, Nukleierungsmittel entweder einzeln oder als Gemisch gegebenenfalls zusammen mit Farbmitteln beigefügt werden. Auf die Zugabe von Stabilisatoren kann aber auch ganz oder teilweise verzichtet werden, da die erfindungsgemäß eingesetzten Copolymere bereits eine hohe Stabilität aufweisen.

Aufgrund ihrer äußerst geringen Emissionswerte können die erfindungsgemäß eingesetzten POM-Copolymerformmassen besonders vorteilhaft direkt zur Herstellung von emissionsarmen Formteilen verwendet werden. Eine Nachbehandlung der Formteile durch Ausheizen ist nicht mehr erforderlich, so dass die Herstellung insgesamt kostengünstiger ist.

Erfindungsgemäße Anwendungsgebiete für die Formmasssen sind Innenausstattungen und Vermeidungen von Verkehrsmitteln wie Automobile, Flugzeuge, Eisenbahnwagons, Haushaltwaren, Spietzeugartikel, insbesondere Kinderspielzeug, Babyartikel sowie elektronische und elektrotechnische Bauteile und Geräte.

Besonders eignet sich die erfindungsgemäß eingesetzte Formmasse auch zur Herstellung eingefärbter Formteile und zur Herstellung von emissionsarmen Apparaturen und Instrumenten, oder Teilen davon, für medizinische Anwendungen, beispielsweise Inhalatoren.

### Beispiele

In den anschließenden Beispielen wurden die Materialeigenschaften nach folgenden Methoden bestimmt:
Schmelzindex nach ISO 1133 bei 190°C und 2,16 kg Auflagegewicht;
Zug-E-Modul nach ISO 527;
Streckspannung nach ISO 527;
Kerbschlagzähigkeit nach ISO 179;
Formaldehydemission: Aus den POM-Copolymerformmassen wurden Platten der Wandstärke 1 mm gefertigt. Nach einer Lagerdauer von 24 Stunden wurde die Formaldehydemission aus den Platten nach VDA 275 ermittelt.

Die Ergebnisse der Materialprüfung der folgenden Beispiele sind in Tabelle 1 zusammengefasst.

### Beispiel 1

3400 g Trioxan wurden mit 190 g Dioxolan in Gegenwart von 35 ppm BF₃ und 1200 ppm Methylal copolymerisiert. Nach dem Abtrennen von nicht umgesetzten Monomeren wurden Initiatorreste und instabile Endgruppen durch Auflösen und Erhitzen des Copolymeren in einem Methanol/Wasser/Trioxan-Gernisch bei 180°C unter Druck entfernt. Der Anteil von Oxyethyleneinheiten im erhaltenen Copolymer betrug 2,05 mol-%. In einem Kneter wurde dieses Polymer aufgeschmolzen und mit Antioxidans, Säurefänger und Additiven entsprechend ihren Anteilen im Vergleichspolymeren gemischt. Aus der Mischung wurde Granulat hergestellt, aus dem im Spritzgußverfahren die Prüfkörper für die Bestimmung des Zug-E-Moduls, der Streckspannung und der Kerbschlagzähigkeit sowie die Platten zur Ermittlung der Formaldehydemission geformt wurden. Der Schmelzindex wurde ebenfalls an der Mischung bestimmt.

### Vergleichsbeispiel 1

3400 g Trioxan wurden mit 275 g Dioxolan in Gegenwart von 35 ppm BF₃ und 1200 ppm Methylal copolymerisiert. Nach dem Abtrennen von nicht umgesetzten Monomeren wurden Initiatorreste und instabile Endgruppen entsprechend Beispiel 1 entfernt. Der Anteil von Oxyethyleneinheiten im erhaltenen Copolymer betrug 3,1 mol-%. Das Copolymer wurde entsprechend Beispiel 1 aufgeschmolzen, mit Antioxidans, Säurefänger und Additiven gemischt, granuliert und zu Prüfkörpern geformt.

### Vergleichsbeispiel 2

Aus handelsüblichem POM-Copolymer (Hostaform®) mit einem zum Beispiel 1 vergleichbaren Schmelzindex von 28 g/10 min wurden entsprechend Beispiel 1 Platten der Wandstärke 1 mm gefertigt und an diesen die Formaldehydemission bestimmt.

### Beispiel 2

3400 g Trioxan wurden mit 180 g Dioxolan in Gegenwart von 35 ppm BF₃ und 800 ppm Methylal copolymerisiert. Nach dem Abtrennen von nicht umgesetzten Monomeren wurden Initiatorreste und instabile Endgruppen entsprechend Beispiel 1 entfernt. Der Anteil von Oxyethyleneinheiten im erhaltenen Copolymer betrug 1,92 mol-%. Das Copolymer wurde entsprechend Beispiel 1 aufgeschmolzen, mit Antioxidans, Säurefänger und Additiven gemischt, granuliert und zu Prüfkörpern geformt.

### Vergleichsbeispiel 3

Aus handelsüblichem POM-Copolymer (Hostaform®) mit einem zum Beispiel 2 vergleichbaren Schmelzindex von 13 g/10 min wurden entsprechend Beispiel 1 Platten der Wandstärke 1 mm gefertigt und an diesen die Formaldehydemission bestimmt.

### Beispiel 3

3400g Trioxan wurden mit 200 g Dioxolan in Gegenwart von 35 ppm BF₃ und 600 ppm Methylal copolymerisiert. Nach dem Abtrennen von nicht umgesetzten Monomeren wurden Initiatorreste und instabile Endgruppen entsprechend Beispiel 1 entfernt. Der Anteil von Oxyethyleneinheiten im erhaltenen Copolymer betrug 2,13 mol-%. Das Copolymer wurde entsprechend Beispiel 1 aufgeschmolzen, mit Antioxidans, Säurefänger und Additiven gemischt, granuliert und zu Prüfkörpern geformt.

### Vergleichsbeispiel 4

3400 g Trioxan wurden mit 280 g Dioxolan in Gegenwart von 35 ppm BF₃ und 600 ppm Methylal copolymerisiert. Nach dem Abtrennen von nicht umgesetzten Monomeren wurden Initiatorreste und instabile Endgruppen entsprechend Beispiel 1 entfernt. Der Anteil von Oxyethyleneinheiten im erhaltenen Copolymer betrug 3,22 mol-%. Das Copolymer wurde entsprechend Beispiel 1 aufgeschmolzen, mit Antioxidans, Säurefänger und Additiven gemischt, granuliert und zu Prüfkörpern geformt.

### Vergleichsbeispiel 5

Aus handelsüblichem POM-Copolymer (Hostaform®) mit einem zum Beispiel 3 vergleichbaren Schmelzindex von 9 g/10 min wurden entsprechend Beispiel 1 Platten der Wandstärke 1 mm gefertigt und an diesen die Formaldehydemission bestimmt.

### Beispiel 4

3400g Trioxan wurden mit 200 g Dioxolan in Gegenwart von 35 ppm BF₃ und 1600 ppm Methylal copolymerisiert. Nach dem Abtrennen von nicht umgesetzten Monomeren wurden Initiatorreste und instabile Endgruppen entsprechend Beispiel 1 entfernt. Der Anteil von Oxyethyleneinheiten im erhaltenen Copolymer betrug 2,08 mol-%. Das Copolymer wurde entsprechend Beispiel 1 aufgeschmolzen, mit Antioxidans, Säurefänger und Additiven gemischt, granuliert und zu Prüfkörpern geformt.

### Vergleichsbeispiel 6

Aus handelsüblichem POM-Copolymer (Hostaform®) mit einem zum Beispiel 4 vergleichbaren Schmelzindex von 50 g/10 min wurden entsprechend Beispiel 1 Platten der Wandstärke 1 mm gefertigt und an diesen die Formaldehydemission bestimmt.

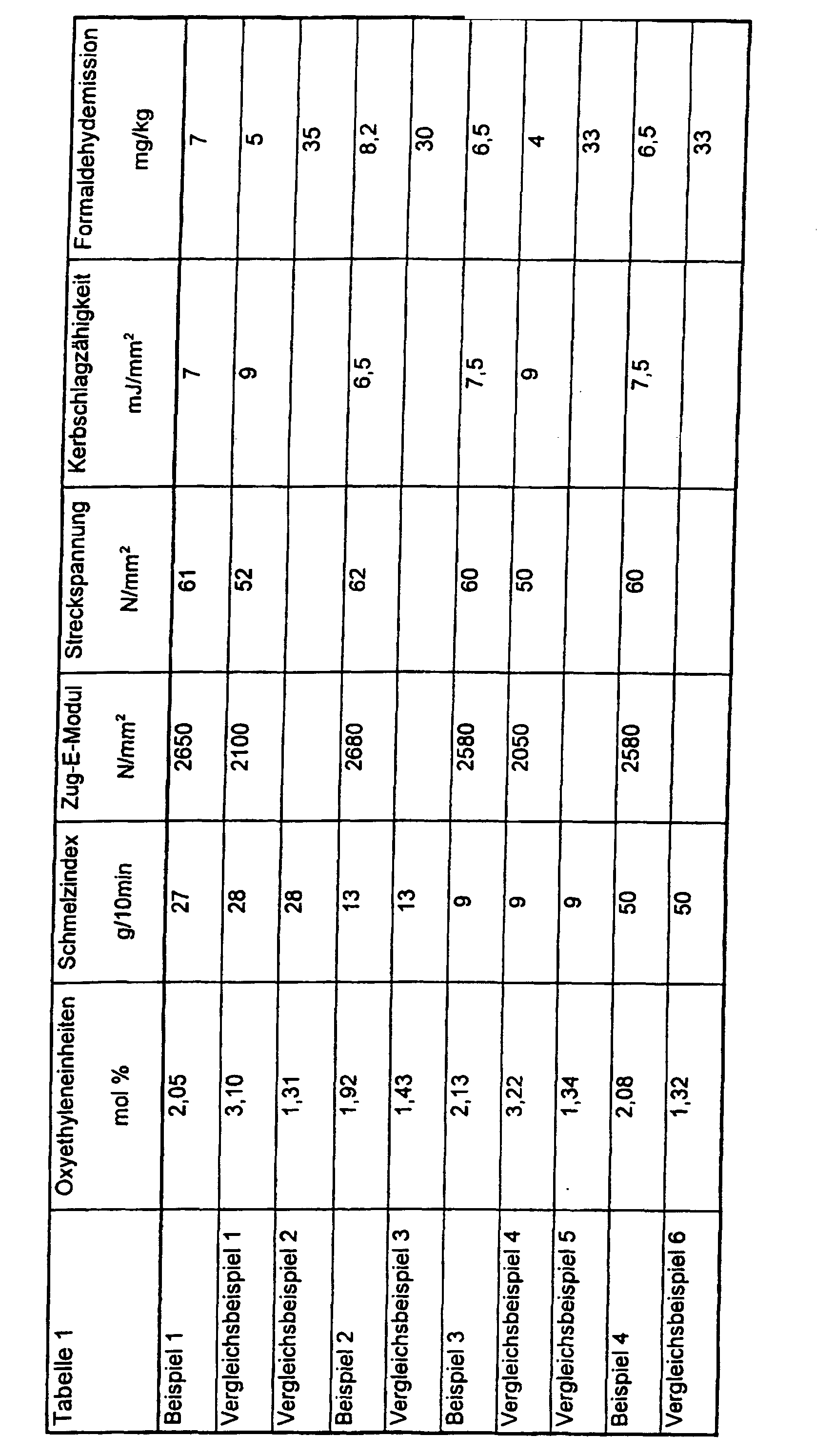

## Patentansprüche

1. Verwendung von Formmassen aus linearen Polyoxymethylen-Copolymeren, die im wesentlichen Oxymethylen- und Oxyethyleneinheiten als Struktureinheiten in der Polymerkette aufweisen, wobei der Anteil der Oxyethyleneinheiten an den Struktureinheiten der Polymerkette 1,85 bis 2,5 mol-%, beträgt, zur Herstellung von Formteilen für die Innenausstattung oder Innenverkleidung von Verkehrsmitteln, wie Automobilen, Flugzeugen und Eisenbahnwagons, die eine Formaldehydemission von weniger als 15 mg/kg aufweisen.

2. Verwendung von Formmassen aus linearen Polyoxymethylen-Copolymeren, die im wesentlichen Oxymethylen- und Oxyethyleneinheiten als Struktureinheiten in der Polymerkette aufweisen, wobei der Anteil der Oxyethyleneinheiten an den Struktureinheiten der Polymerkette 1,85 bis 2,5 mol-%, beträgt, zur Herstellung von Formteilen in Form von Haushaltwaren, Spielzeugartikeln, insbesondere Kinderspielzeug, und Babyartikeln, die eine Formaldehydemission von weniger als 15 mg/kg aufweisen.

3. Verwendung von Formmassen aus linearen Polyoxymethylen-Copolymeren, die im wesentlichen Oxymethylen- und Oxyethyleneinheiten als Struktureinheiten in der Polymerkette aufweisen, wobei der Anteil der Oxyethyleneinheiten an den Struktureinheiten der Polymerkette 1,85 bis 2,5 mol-%, beträgt, zur Herstellung von Formteilen in Form von elektronischen und elektrotechnischen Bauteilen und Geräten, die eine Formaldehydemission von weniger als 15 mg/kg aufweisen.

4. Verwendung von Formmassen aus linearen Polyoxymethylen-Copolymeren, die im wesentlichen Oxymethylen- und Oxyethyleneinheiten als Struktureinheiten in der Polymerkette aufweisen, wobei der Anteil der Oxyethyleneinheiten an den Struktureinheiten der Polymerkette 1,85 bis 2,5 mol-%, beträgt, zur Herstellung von Formteilen in Form von Apparaturen und Instrumenten für medizinische Anwendungen, die eine Formaldehydemission von weniger als 15 mg/kg aufweisen.

5. Verwendung nach einem der Ansprüche 1 bis 4, **dadurch gekennzeichnet, dass** die Formteite eine Formaldehydemission von weniger als 10 mg/kg aufweisen.

6. Verwendung nach einem der Ansprüche 1 bis 4, **dadurch gekennzeichnet, dass** die Formmasse Antioxidantien, Säurefänger, Stabilisatoren und Farbmittel enthält.

7. Verwendung nach einem der Ansprüche 1 bis 4, **dadurch gekennzeichnet, dass** die Formteile eingefärbt sind.

## Claims

1. The use of a molding composition made from linear polyoxymethylene copolymers which in essence have oxymethylene units and oxyethylene units as structural units in the polymer chain, where the proportion of oxyethylene units in the structural units of the polymer chain is from 1.85 to 2.5 mol%, for producing moldings for interior fittings or interior cladding in means of transport, such as automobiles, aircraft and railroad cars, whose formaldehyde emission is less than 15 mg/kg.

2. The use of a molding composition made from linear polyoxymethylene copolymers which in essence have oxymethylene units and oxyethylene units as structural units in the polymer chain, where the proportion of oxyethylene units in the structural units of the polymer chain is from 1.85 to 2.5 mol%, for producing moldings in the form of household products, recreational items, in particular toys, and items for babies, whose formaldehyde emission is less than 15 mg/kg.

3. The use of a molding composition made from linear polyoxymethylene copolymers which in essence have oxymethylene units and oxyethylene units as structural units in the polymer chain, where the proportion of oxyethylene units in the structural units of the polymer chain is from 1.85 to 2.5 mol%, for producing moldings in the form of devices and components for electrical engineering and electronics, whose formaldehyde emission is less than 15 mg/kg.

4. The use of a molding composition made from linear polyoxymethylene copolymers which in essence have oxymethylene units and oxyethylene units as structural units in the polymer chain, where the proportion of oxyethylene units in the structural units of the polymer chain is from 1.85 to 2.5 mol%, for producing moldings in the form of apparatuses and instruments for medical applications, whose formaldehyde emission is less than 15 mg/kg.

5. The use as claimed in any one of daims 1 to 4, wherein the moldings have a formaldehyde emission of less than 10 mg/kg.

6. The use as claimed in any of claims 1 to 4, wherein the molding composition comprises antioxidants, acid scavengers, stabilizers and colorants.

7. The use as claimed in any one of claims 1 to 4, wherein the moldings have been colored.

## Revendications

1. Utilisation de matières à mouler à base de copolymères linéaires de polyoxyméthylène qui comportent essentiellement des motifs oxyméthylène et oxyéthylène en tant que motifs structuraux dans la chaîne polymère, la proportion des motifs oxyéthylène dans les motifs structuraux de la chaîne polymère allant de 1,85 à 2,5 % en moles, pour la fabrication de pièces moulées pour l'équipement intérieur ou l'habillage intérieur de moyens de transport tels que des automobiles, des aéronefs et des wagons de chemins de fer, qui présentent une émission de formaldéhyde inférieure à 15 mg/kg.

2. Utilisation de matières à mouler à base de copolymères linéaires de polyoxyméthylène qui comportent essentiellement des motifs oxyméthylène et oxyéthylène en tant que motifs structuraux dans la chaîne polymère, la proportion des motifs oxyéthylène dans les motifs structuraux de la chaîne polymère allant de 1,85 à 2,5 % en moles, pour la fabrication de pièces moulées sous forme d'articles ménagers, d'articles de jeu, en particulier de jouets pour enfants, et d'articles pour bébés, qui présentent une émission de formaldéhyde inférieure à 15 mg/kg.

3. Utilisation de matières à mouler à base de copolymères linéaires de polyoxyméthylène qui comportent essentiellement des motifs oxyméthylène et oxyéthylène en tant que motifs structuraux dans la chaîne polymère, la proportion des motifs oxyéthylène dans les motifs structuraux de la chaîne polymère allant de 1,85 à 2,5 % en moles, pour la fabrication de pièces moulées sous forme d'appareils et de composants électroniques et électrotechniques, qui présentent une émission de formaldéhyde inférieure à 15 mg/kg.

4. Utilisation de matières à mouler à base de copolymères linéaires de polyoxyméthylène qui comportent essentiellement des motifs oxyméthylène et oxyéthylène en tant que motifs structuraux dans la chaîne polymère, la proportion des motifs oxyéthylène dans les motifs structuraux de la chaîne polymère allant de 1,85 à 2,5 % en moles, pour la fabrication de pièces moulées sous forme d'appareils et d'instruments pour applications médicales, qui présentent une émission de formaldéhyde inférieure à 15 mg/kg.

5. Utilisation selon l'une quelconque des revendications 1 à 4, **caractérisée en ce que** les pièces moulées présentent une émission de formaldéhyde inférieure à 10 mg/kg.

6. Utilisation selon l'une quelconque des revendications 1 à 4, **caractérisée en ce que** la matière à mouler contient des antioxydants, des capteurs d'acide, des stabilisants et des colorants.

7. Utilisation selon l'une quelconque des revendications 1 à 4, **caractérisée en ce que** les pièces moulées sont colorées.
